# EUROPÄISCHE PATENTSCHRIFT

(11) **EP 3 986 727 B1**
(45) Veröffentlichungstag und Bekanntmachung des Hinweises auf die Patenterteilung: **02.08.2023**
(21) Anmeldenummer: 20732529.1
(22) Anmeldetag: 08.06.2020
(51) Int. Cl.: B60C 27/08

(54) **KETTENSTRANG FÜR EINE REIFENKETTE UND VERFAHREN ZUR HERSTELLUNG EINES KETTENSTRANGS**
CHAIN STRING FOR A TIRE CHAIN AND METHODE FOR PRODUCING SUCH A CHAIN STRING
BRIN DE CHAÎNE POUR UNE CHAÎNE DE PNEU ET PROCÉDÉ DE FABRICATION D'UN BRIN DE CHAÎNE

(30) Priorität: 24.06.2019 DE 102019209107
(43) Veröffentlichungstag der Anmeldung: 27.04.2022
(73) Patentinhaber: RUD Ketten Rieger & Dietz GmbH u. Co. KG, 73432 Aalen (DE)
(72) Erfinder: RIEGER, Johannes, 73447 Oberkochen (DE); RÖSLER, Bernd, 73433 Aalen (DE)
(74) Vertreter: Grünecker Patent- und Rechtsanwälte PartG mbB
(86) Internationale Anmeldenummer: PCT/EP2020/065854
(87) Internationale Veröffentlichungsnummer: WO 2020/259999

(56) Entgegenhaltungen:
- EP-A2- 1 747 915
- CN-A- 108 016 222
- DE-A1-102016 218 913

## Beschreibung

Die Erfindung betrifft einen Kettenstrang für eine Reifenkette mit einer Mehrzahl von ineinander gehängten Kettengliedern, wobei wenigstens ein Kettenglied eine als Schweißstelle ausgebildete Fügestelle aufweist, an der das Kettenglied zusammengefügt ist. Des Weiteren betrifft die Erfindung ein Verfahren zum Herstellen eines Kettenstrangs für eine Reifenkette mit einer Mehrzahl von ineinander gehängten Kettengliedern.

Es ist bekannt Fahrzeuge mit Reifenketten, beispielsweise Reifenschutzketten oder Gleitschutzketten auszustatten, zum Schutz der Fahrzeugreifen und/oder zur Erhöhung der Traktion auf der zu befahrenden Oberfläche. Insbesondere auf Baustellen und/oder Bergwerken können Reifenketten die Fahrzeugreifen vor spitzen Gegenständen schützen. Die Kettenglieder der Kettenstränge sind hohen Belastungen ausgesetzt, so dass ein vergleichsweise hoher Materialaufwand zu betreiben ist. Außerdem müssen für unterschiedlich große Reifen entsprechend unterschiedlich große Reifenketten gefertigt werden. Hierfür ist es von Vorteil, wenn die Fertigung der Reifenkette flexibel und unter möglichst geringer Lagerhaltung stattfindet.

CN 108 016 222 A betrifft einen Kettenstrang für Reifenketten. Der Kettenstrang weist eine Mehrzahl von ineinander gehängten Verbindungsgliedern und Steggliedern auf. Die Verbindungsglieder sind aus einem kohlenstoffarmen Stahl geformt und die Stegglieder aus einem Stahl mit mittlerem Kohlenstoffgehalt. Um Stegglieder und Verbindungsglieder separat voneinander mit Wärme zu behandeln, sind die Stegglieder zweiteilig aufgebaut, wobei nach einer Wärmebehandlung die Verbindungsglieder in eine Öffnung der jeweiligen Stegglieder eingesetzt werden, bevor die Teile der jeweiligen Stegglieder miteinander verschweißt werden.

EP 1 747 915 A2 betrifft eine Reifenkette mit Verbindungsgliedern, in die Stegglieder eingehängt sind.

DE 10 2016 218 913 A1 betrifft ein Stegelement für ein Reifennetz einer Gleitschutz- oder Reifenschutzvorrichtung. Das Stegelement weist wenigstens zwei Öffnungen zur Verbindung des Stegelements mit wenigstens zwei weiteren Elementen des Reifennetzes auf und ist aus wenigstens zwei Teilen entlang einer das Stegelement in Längsrichtung durchsetzende Fuge zusammengefügt.

Folglich ist es Aufgabe der Erfindung, einen verschleißbeständigen Kettenstrang flexibel und kostengünstig herzustellen.

Die Aufgabe wird erfindungsgemäß durch den Anspruchsgegenstand der unabhängigen Ansprüche gelöst.

Bevorzugte Ausgestaltungen sind durch die abhängigen Ansprüche definiert.

Weiterhin wird die Aufgabe erfindungsgemäß durch das eingangs genannte Verfahren gelöst, bei dem das wenigstens eine Kettenglied vor dem Verschweißen wärmebehandelt wird.

Durch die Wärmebehandlung vor dem Verschweißen kann das wenigstens eine Kettenglied des Kettenstrangs separat wärmebehandelt werden. Die Kettenglieder sind bei der Wärmebehandlung noch nicht in einen Kettenstrang eingehängt. Somit kann beispielsweise zur Wärmebehandlung in einem Ofen die Ofenkapazität besser ausgenutzt werden, da eine dichtere Anordnung der Kettenglieder möglich ist. Weiterhin kann durch die Wärmebehandlung das Gefüge des wenigstens einen Kettenglieds eingestellt werden, wodurch die Parameter des Kettenglieds, wie z.B. die Härte, bestimmt werden können. Es besteht die Möglichkeit, die Wärmebehandlung individuell anzupassen, wodurch mehr Freiheiten bei der Gestaltung des Kettenstrangs entstehen.

Die Wärmebehandlung vor dem Schweißen spiegelt sich im Gefüge des wenigstens einen Kettengliedes wieder. Das Gefüge kann beispielsweise durch ein Lichtmikroskop untersucht werden, wobei durch eine Beurteilung der Größe, Form und Anordnung Rückschlüsse auf den Wärmebehandlungsprozess gezogen werden können.

Über das Gefügebild kann beispielsweise festgestellt werden, dass die Schweißstelle in ein zuvor wärmebehandeltes Gefüge eingebettet ist. Zwischen Schweißgut und das zuvor wärmebehandelte Gefüge kann an dem wenigstens einen Kettenglied ein Übergangsabschnitt angeordnet sein, an dem durch das Schweißen das Gefüge sich vom restlichen Kettenglied unterscheidet.

Im Folgenden sind Weiterbildungen angeführt, die unabhängig voneinander beliebig miteinander kombinierbar sind und jeweils für sich betrachtet vorteilhaft sind.

So kann gemäß einer ersten vorteilhaften Ausgestaltung der Kettenstrang eine Mehrzahl von reihenweise oder netzartig ineinander gehängten Kettengliedern aufweisen. Bei der reihenweisen Anordnung kann in einer Reifenkette beispielsweise eine Vielzahl von Kettensträngen parallel zueinander angeordneten Kettensträngen aufgebaut werden, wodurch die einzelnen Kettenstränge leicht handzuhaben sind. Bei den netzartig aufgebauten Kettensträngen kann eine große Fläche des Fahrzeugreifens abgedeckt werden, wodurch sich insbesondere bei einem engmaschigen Netz beispielsweise der Schutzbereich einer Reifenschutzkette erhöht. Das wenigstens eine Kettenglied kann aus wenigstens zwei miteinander verschweißten Teilen aufgebaut sein, wodurch sich der Zusammenbau, insbesondere das Einhängen der Kettenglieder in benachbarte Kettenglieder weiter vereinfacht.Das wenigstens eine mehrteilige Kettenglied kann vor dem Verschweißen leicht in ein weiteres Kettenglied, beispielsweise ein Verbindungsglied, eingehängt und anschließend verschweißt werden.

Die Teile des wenigstens einen mehrteiligen Kettengliedes können unterschiedliche Materialeigenschaften aufweisen, wodurch der Kettenstrang weiter optimiert werden kann. Beispielsweise kann ein Teil, welches bei einer auf einen Fahrzeugreifen montierten Reifenkette von dem Fahrzeugreifen, insbesondere der Lauffläche des Fahrzeugreifens, abgewandt ist, mit einer höheren Materialstärke als der Rest des Kettengliedes versehen sein. Das auf dem Fahrzeugreifen, insbesondere der Lauffläche des Fahrzeugreifens, aufliegende Teil kann im Vergleich zum anderen Teil einen Werkstoff mit einem geringeren Gewicht aufweisen.

Das wenigstens eine Kettenglied kann ein Stegglied sein. Mehrere Stegglieder können in ein im Wesentlichen ringförmiges Verbindungsglied eingehängt sein.

Das wenigstens eine Kettenglied kann ein Stegglied sein, welches bei der auf dem Fahrzeugreifen montierten Reifenkette in Richtung weg von dem Fahrzeugreifen, insbesondere der Lauffläche des Fahrzeugreifens, gegenüber den anderen, insbesondere liegenden Kettenglie-dern, wie z.B. den Verbindungsgliedern, hervorragt. Ein solches Stegglied bildet die Lauffläche der Reifenkette und sichert die Traktion. Das Stegglied kann im Vergleich zum Verbindungsglied besonders verschleißfest ausgestaltet sein. Insbesondere kann das Stegglied auf der von der Lauffläche des Fahrzeugreifens abgewandten Seite einen Verschleißsteg aufweisen, dessen Materialstärke gegenüber dem übrigen Kettenglied verstärkt ist.

Das wenigstens eine Kettenglied und das Verbindungsglied und/oder die zusammengefügten Teile des wenigstens einen Kettenglieds können aus unterschiedlichen Werkstoffen gefertigt sein. So kann beispielsweise das Stegglied aus einem verschleißbeständigeren Werkstoff gefertigt sein als das Verbindungsglied. Die wenigstens zwei Kettenglieder und/oder die zusammengefügten Teile des wenigstens einen Ketteglieds können aus unterschiedlichen Metalllegierungen gefertigt sein und/oder unterschiedliche Gefüge aufweisen.

Gemäß einer weiteren vorteilhaften Ausgestaltung können das wenigstens eine Stegglied und das Verbindungsglied und/oder die zusammengefügten Teile des wenigstens einen Kettenglieds, die aus unterschiedlichen Werkstoffen gefertigt sind, unterschiedlich, insbesondere getrennt voneinander, wärmebehandelt werden bzw. sein. Dadurch können die Eigenschaften jedes Teils des wenigstens einen Kettenglieds und/oder der unterschiedlichen Kettenglieder individuell und unabhängig voneinander durch die Wärmebehandlung optimiert sein. Ein Rückschluss auf den jeweiligen Wärmebehandlungsprozess kann beispielsweise durch eine gefügetechnische Untersuchung unter einem Lichtmikroskop gezogen werden.

In dem Kettenstrang können Verbindungsglieder und Stegglieder alternierend angeordnet sein. Bei einem Kettenstrang mit netzartig ineinander gehängten Kettengliedern kann eine Vielzahl von Steggliedem, beispielsweise vier Stegglieder, in einem Verbindungsglied eingehängt sein.

Die zwei zusammengeschweißten Teile des wenigstens einen Kettengliedes können vorzugsweise zusätzlich über eine Formschlussverbindung miteinander verbunden sein. So können beispielsweise die Teile ineinander gesteckt sein, wodurch eine Formschlussverbindung quer zur Steckrichtung erzeugt wird. Ein Teil kann beispielsweise mit wenigstens einem Zapfen versehen sein, der in eine korrespondierende Öffnung des anderen Teils eingesteckt sein kann. Der Zapfen kann in die Öffnung hineinragen oder die Öffnung auch durchragen. Beim Verschweißen kann der Zapfen in der Schweißstelle angeordnet sein, wodurch beim Schwei-βen eine große Oberfläche zur Verfügung steht, um die beiden Teile miteinander zu verschweißen.

Das in das andere Teil eingesteckte Teil kann eine Gabelform mit einer Basis und von der Basis weg, sich zum anderen Teil hin erstreckende Zinken aufweisen. An jedem Zinken kann am freien Ende ein Zapfen angeordnet sein, der jeweils in eine korrespondierende Öffnung des anderen Teils eingesteckt werden kann. Vorzugsweise kann das eingesteckte Teil die Form eines Dreizacks aufweisen, wobei der mittlere Zinken einen Steg darstellt, der eine Einhängeöffnung des wenigstens einen Kettengliedes zweiteilt. Dadurch kann in jeder Hälfte der Einhängeöffnung ein weiteres Kettenglied ohne Verklanken eingehängt werden.

Die Basis kann eine im Vergleich zu den Zapfen und/oder Zinken höhere Materialstärke aufweisen. Die Basis kann bei der auf dem Fahrzeugreifen montierten Reifenkette dem Untergrund zugewendet sein und kann dadurch erhöhten Belastungen ausgesetzt sein. Durch die höhere Materialstärke können diese höheren Belastungen kompensiert werden, wobei zugleich das Gewicht des wenigstens einen Kettengliedes geringgehalten werden kann.

Das Teil, welches das andere Teil aufnimmt, kann plattenförmig sein und mit zu den wenigstens einem Zapfen komplementären Öffnungen versehen sein. Die Öffnungen können das Teil durchsetzen, also Durchgangsöffnungen sein. Vorzugsweise sind die Öffnungen an der Schweißstelle angeordnet, wodurch das Schweißmittel in die Öffnung eindringen kann und eine große Kontaktfläche zwischen Zapfen und Wandung der Öffnung zum Schweißen entsteht.

Das Teil weist kann eine die Öffnung wenigstens abschnittsweise umgebende Aussparung in Form beispielsweise einer Senke auf.

Die wenigstens eine Öffnung kann vorzugsweise in der wenigstens einen Aussparung münden, sodass ein fließender Übergang entsteht. Die wenigstens eine Aussparung kann an dem Teil mit der Öffnung auf der vom eingesteckten Teil abgewandten Seite angeordnet sein. Durch die wenigstens eine Aussparung kann eine größere freie Fläche für die Schweißverbindung entstehen. Die wenigstens eine Aussparung kann mit einem Schweißmittel gefüllt sein.

Erfindungsgemäß ragt der wenigstens eine Zapfen nicht auf der vom eingesteckten Teil abgewandten Seite des anderen Teils über die wenigstens eine Auspaarung heraus, sodass der Zapfen nicht bei der auf dem Fahrzeugreifen montierten Reifenkette gegen den Fahrzeugreifen, insbesondere dessen Laufläche, drückt.

In einer weiteren vorteilhaften Ausgestaltung kann wenigstens ein Teil an seiner zum anderen Teil zugewandten Seite mit wenigstens einer Vertiefung zur Auflage eines in das wenigstens eine Kettenglied eingehängten weiteren Kettenglieds versehen sein. So kann ein Verklanken, d.h. Festklemmen der Kettenglieder in einer Schrägstellung, insbesondere einer Querstellung zueinander, verhindert werden. Durch die wenigstens eine Vertiefung kann ein Bewegungsraum für das eingehängte Kettenglied erzeugt werden, wodurch das Verklanken verhindert werden kann. Beim Lösen einer Verklankung kommt es zu einer hohen und ruckartigen Belastung, die zu einer Zerstörung des Kettenstranges führen kann. Auch im festgeklemmten Zustand der Kettenglieder kann der Kettenstrang höheren Kräften ausgesetzt sein, die zu einer Beanspruchung des Kettenstrangs führen, die über die Beanspruchung eines Kettenstrangs in einer gestreckten Lage hinausgehen. Folglich kann durch die wenigstens eine Vertiefung der Abnutzungswiderstand des Kettenstrangs verbessert werden.

Jeweils eine Vertiefung kann an einer Eingangs- und einer Ausgangsebene, in der das eingehängte Kettenglied in die Einhängeöffnung eintritt bzw. austritt, der Einhängeöffnung angeordnet sein. Insbesondere wenn die Einhängeöffnung durch einen Steg geteilt ist, kann in jedem separaten Abschnitt der Einhängeöffnung wenigstens eine Vertiefung angeordnet sein. Die wenigstens eine Vertiefung kann beispielsweise als Fase ausgeformt sein, die sich nach au-βen hin ausweitet.

Die wenigstens eine Vertiefung kann an dem Teil des wenigstens einen Kettengliedes angeordnet sein, das im montierten Zustand auf der Lauffläche des Reifens aufliegt. In dieses Teil kann das andere Teil eingesteckt sein. Alternativ dazu oder auch zusätzlich kann eine Vertiefung am eingesteckten Teil ausgebildet sein.

Ein erfindungsgemäßer Kettenstrang kann in einem Laufnetz einer Reifenkette für Fahrzeugreifen angeordnet sein und/oder das Laufnetz setzt sich aus derartigen Kettensträngen zusammen. Eine Mehrzahl der erfindungsgemäßen Kettenstränge kann sich im Laufnetz der Reifenkette befinden. Ein erfindungsgemäßer Kettenstrang kann aber auch selber das Laufnetz der Reifenkette bilden.

Die wärmebehandelten Kettenglieder und/oder Teile eines Kettenglieds können mit einem Handhabungsroboter zum Kettenstrang zusammengelegt, insbesondere ineinandergehängt werden und anschließend kann das wenigstens eine Kettenglied mit einem Schweißroboter verschweißt werden. Folglich kann eine automatisierte Produktion des Kettenstranges erzielt werden.

Der Handhabungsroboter kann die Kettenglieder und/oder die Teile eines Kettengliedes direkt nach der Wärmebehandlung zusammenlegen, sodass diese beim Schweißen bereits erwärmt sind. Durch das zuvor wärmebehandelte Gefüge verringert sich die Temperaturdifferenz zwischen Schweißnaht und dem zu schweißenden Material. Folglich können thermische Spannungen reduziert werden. Weiterhin kann durch die Wärmevorbehandlung die Abkühlgeschwindigkeit nach dem Schweißen gesenkt werden, wodurch unerwünschte Verhärtungserscheinungen vermieden werden können und somit das Risiko von Kaltrissen minimiert werden kann.

Im Folgenden ist die Erfindung anhand von Ausführungsbeispielen mit Bezug auf die beigefügten Figuren exemplarisch näher beschrieben. In den Figuren sind Elemente, die einander hinsichtlich Aufbau und/oder Funktion entsprechen, mit denselben Bezugszeichen versehen.

Es zeigen:
- Fig. 1: eine schematische Perspektivansicht eines erfindungsgemäßen Kettenstrangs;
- Fig. 2: eine schematische Perspektivansicht eines Verbindungsglieds des erfindungsgemäβen Kettenstrangs;
- Fig. 3: eine schematische Perspektivansicht einer zweiten Ausgestaltung eines Kettenglieds des erfindungsgemäßen Kettenstrangs;
- Fig. 4: eine schematische Frontalansicht der zweiten Ausgestaltung des Kettengliedes; und
- Fig.5: eine schematische Schnittansicht der zweiten Ausgestaltung des Kettengliedes.

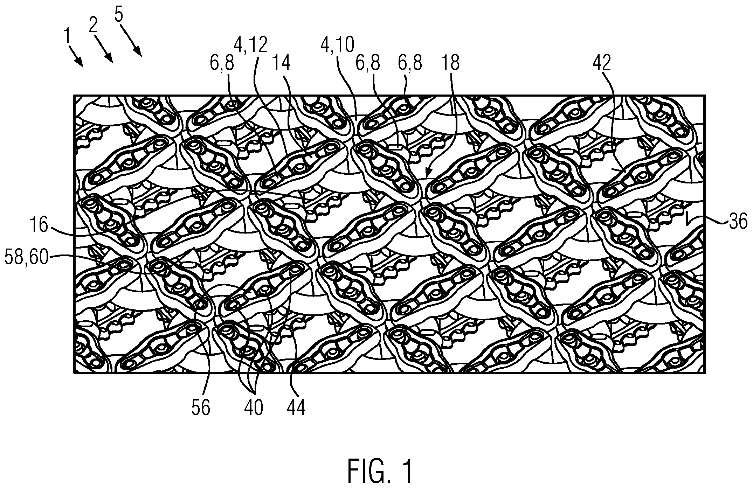

In Fig.1 ist eine schematische Perspektivansicht eines erfindungsgemäßen Kettenstrangs 1 für eine Reifenkette 2 gezeigt. In dieser beispielhaften Ausgestaltung weist der Kettenstrang 1 eine Mehrzahl von netzartig ineinander gehängten Kettengliedern 4 auf. Die Kettenglieder 4 können jedoch auch reihenweise ineinander gehängt sein. Der Kettenstrang 1 kann ein Laufnetz 5 der Reihenkette 2 bilden oder in dem Laufnetz 5 eingehängt sein.

Die Kettenglieder 4 weisen jeweils eine als Schweißstelle 6 ausgebildete Fügestelle 8 auf, an der das jeweilige Kettenglied 4 zusammengeschweißt ist. Um die Effizienz der Produktion des Kettenstranges 1 zu verbessern und um einen Kettenstrang 1 mit verbesserten, insbesondere optimierten, Materialeigenschaften herzustellen, ist wenigstens ein Kettenglied 4 vor dem Verschweißen wärmebehandelt. Somit können die einzelnen Kettenglieder 4 beispielsweise in einer dichteren Anordnung in einen Ofen gelegt werden, wodurch in einem einzelnen Schritt eine höhere Anzahl an Kettenglieder 4 wärmebehandelt werden können. Insbesondere können unterschiedliche Materialeigenschaften durch eine separate Wärmebehandlung der Kettenglieder 4 erzielt werden, wodurch die Kettenglieder 4 gemäß ihrer Aufgabe und/oder Position im Kettenstrang 1 optimiert werden können.

In dieser beispielhaften Ausgestaltung sind zwei Bauformen von Kettengliedern 4 gezeigt; die erste Bauform umfasst ringförmige, einteilige Verbindungsglieder 10 und die zweite Bauform umfasst Stegglieder 12, die aus zwei miteinander verschweißbaren Teilen 14, 16 aufgebaut sind. Die Verbindungsglieder 10 und die Stegglieder 12 können im Kettenstrang 1 alternierend angeordnet sein, sodass ein Stegglied 12 in wenigstens zwei Verbindungsgliedern 10 eingehängt ist. Bei einer netzartigen Ausgestaltung des Kettenstrangs 1 kann das Verbindungsglied 10 als Knotenpunkt 18 dienen, an dem beispielsweise vier Stegglieder 12 kreuzförmig angeordnet sein können.

Die Stegglieder 12 und Verbindungsglieder 10 können quer zueinander angeordnet sein, sodass die Stegglieder 12 bei einer auf einem Fahrzeugreifen montierten Reifenkette 2 auf dem Fahrzeugreifen, insbesondere dessen Lauffläche aufliegt, und die Verbindungsglieder 10 parallel zur Lauffläche angeordnet sind. Insbesondere können die Stegglieder 12 bei der auf dem Fahrzeugreifen montierten Reifenkette 2 in Richtung von der Lauffläche weg über die Verbindungsglieder 10 hinwegragen, sodass die Stegglieder 12 eher mit dem Untergrund in Kontakt kommt.

Stegglieder 12 und Verbindungsglieder 10 können unterschiedliche Materialeigenschaften aufweisen und vorzugsweise aus unterschiedlichen Werkstoffen gefertigt sein. So kann das Stegglied 12, welches einer höheren Belastung ausgesetzt ist, besonders hart und verschleißarm ausgebildet sein und das Verbindungsglied ein möglichst geringes Gewicht aufweisen. Dies kann insbesondere durch eine individuell angepasste Wärmebehandlung der einzelnen Kettenglieder 4 ermöglicht werden. Da die Kettenglieder 4 vor dem Ineinanderhängen wärmebehandelt sind, müssen sie nicht gemeinsam einem Ofen zugeführt werden, sondern können separat und unabhängig voneinander wärmebehandelt werden. Die Parameter für die Wärmebehandlung können somit optimal für die unterschiedlichen Kettenglieder 4 eingestellt werden.

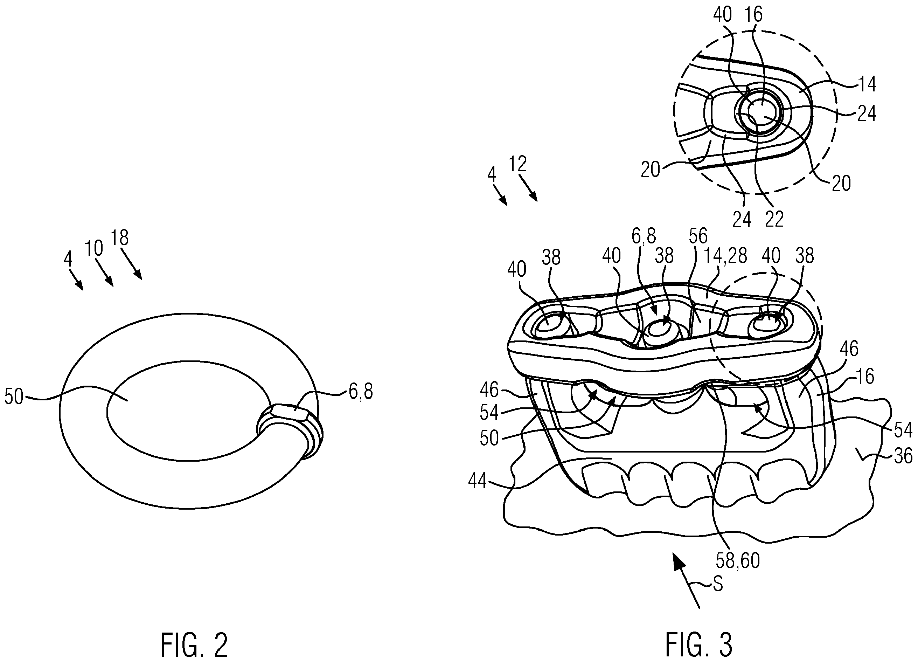

Ein Verbindungsglied 10 ist in Fig. 2 in einer schematischen Perspektivansicht gezeigt. Das Verbindungsglied 10 kann einteilig aufgebaut sein, wobei das Verbindungsglied 10 vorzugsweise zu einer Ringform zusammengeschweißt sein kann. Es kann aber auch andere Formen, beispielsweise polygonale Formen, aufweisen. Das Verbindungsglied 10 dient als Kopplungselement für die Stegglieder 12 und soll ein möglichst geringes Gewicht aufweisen. Durch die Gewichtsersparnis kann allgemein das Gewicht der Reifenkette reduziert werden, wodurch der Transport und das Montieren der Reifenkette erleichtert werden kann. Weiterhin kann durch die Gewichtsreduzierung der Kraftstoffverbrauch des Fahrzeugs mit montierter Reifenkette verringert werden. Dies kann beispielsweise dadurch erreicht werden, dass das Verbindungsglied 10, zumindest im Vergleich zum Stegglied 12, aus einer Metalllegierung mit einem geringeren Gewicht geformt ist. Durch die unterschiedliche Legierungszusammensetzung und/oder die unterschiedliche Aufgabe im Vergleich zum Stegglied 12 kann der Wärmevorbehandlungsprozess andere Parameter aufweisen als beim Stegglied 12. Mit der erfindungsgemäßen Lösung ist es jedoch möglich, Stegglied 12 und Verbindungsglied 10 unabhängig voneinander mit Wärme zu behandeln, sodass die optimalen Prozessbedingungen jeweils beim Verbindungsglied 10 und Stegglied 12 eingestellt werden können.

Das Verbindungsglied 10 kann vorzugsweise nach dem Verschweißen in die Ringform wärmebehandelt sein. So kann ein Brechen des durch die Wärmebehandlung gehärteten Verbindungsglieds 10 beim Umformen verhindert werden.

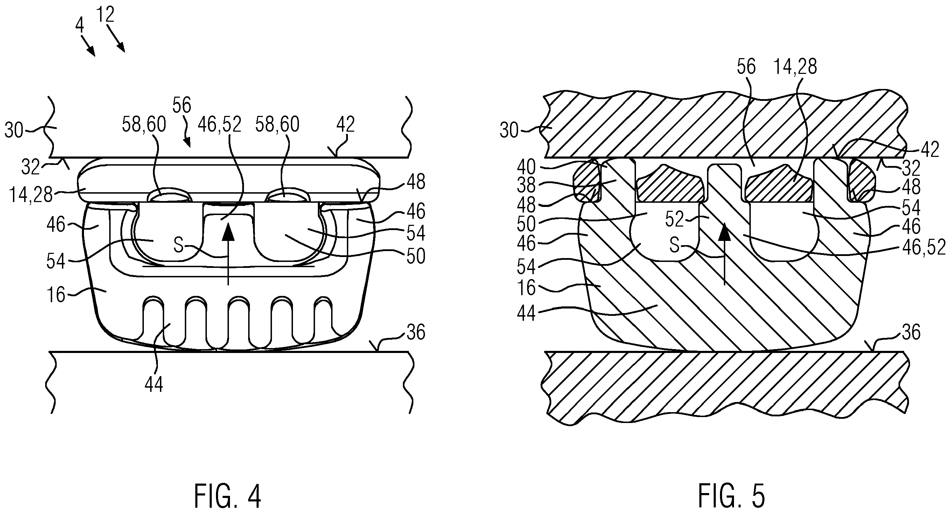

Nun wird mit Bezug auf Fig. 3 bis 5 eine beispielhafte Ausgestaltung eines Stegglieds 12 eines erfindungsgemäßen Kettenstrangs 1 näher erläutert. In Fig. 3, 4 und 5 ist das Stegglied 12 in einer schematischen Perspektivdarstellung, einer schematischen Frontalansicht bzw. einer schematischen Schnittansicht gezeigt.

Das Stegglied 12 kann aus zwei Teilen 14, 16 aufgebaut sein, wobei das eine Teil 14 als Auflageteil 28 dient und bei auf dem Fahrzeugreifen 30 (schematisch dargestellt) montierten Reifenkette 2 auf einer Lauffläche 32 des Fahrzugreifens 30 aufliegt. Das Auflageteil 28 ist vorzugsweise plattenförmig, damit es möglichst gleichmäßig auf der Lauffläche 32 aufliegen kann und den Fahrzeugreifen 30 flächig und nicht punktuell belastet. Das andere Teil 16 ist bei der auf dem Fahrzeugreifen 30 montierten Reifenkette 2 von der Lauffläche 32 abgewandt und ragt radial von der restlichen Reifenkette 2 hervor, sodass dieses Teil 16 mit dem Untergrund 36 in Kontakt kommt.

Die Teile 14, 16 können über eine Formschlussverbindung miteinander verbunden sein. Beispielsweise können sie in einer Steckrichtung S ineinandergesteckt sein, sodass sie eine Formschlussverbindung quer zur Steckrichtung S aufweisen können. Anschließend können die beiden Teile 14, 16 durch Verschweißen zusammengefügt werden, wodurch eine besonders stabile stoffschlüssige Verbindung zwischen den Teilen 14, 16 entsteht.

Ein Teil 14 ist mit Öffnungen 38 versehen, in die korrespondierende Zapfen 40 des anderen Teils 16 eingesteckt werden.

Die Zapfen 40 können in die korrespondierende Öffnung 38 hineinragen oder auch durchragen, wobei die Zapfen 40 nicht über eine Auflageebene 42, an der das Auflageteil 28 an der Lauffläche 32 bei auf dem Fahrzeugreifen 30 montierter Reifenkette 2 aufliegt, in Richtung zur Lauffläche 32 hin hinweg ragen.

Der eingesteckte Zapfen 40 kann vorzugsweise in der Schweißstelle 6 angeordnet sein, wodurch eine möglichst große Kontaktfläche zwischen den beiden Teilen 14, 16 beim Schwei-βen bereitgestellt wird.

Das in das andere Teil 14 eingesteckte Teil 16 kann eine Gabelform aufweisen, insbesondere die Form eines Dreizacks mit einer Basis 44 und drei sich von der Basis 44 wegerstreckenden Zinken 46. An der Spitze von jedem Zinken 46 kann ein Zapfen 40 mit einer im Vergleich zum Zinken 46 geringeren Materialstärke angeordnet sein, sodass ein Stufenabschnitt 48 zwischen Zinken 46 und Zapfen 40 entsteht, mit dem das eingesteckte Teil 16 an dem aufnehmenden Teil 14 anschlägt und eine weitere Bewegung in Steckrichtung S relativ zueinander blockiert. Die äußeren Zinken 46 können eine Einhängeöffnung 50, in die weitere Kettenglieder 4 eingehängt werden können, zusammen mit der Basis 44 und dem Teil 14 begrenzen. Der mittlere Zinken 46 kann dabei als Steg 52 fungieren und die Einhängeöffnung 50 teilen, sodass die Einhängeöffnung 50 zwei voneinander getrennte Einhängeabschnitte 54 aufweist. Jeweils ein Kettenglied 4 kann in einen Einhängeabschnitt 54 eingehängt werden, sodass verhindert werden kann, dass die eingehängten Kettenglieder 4 aneinandergeraten und verkanten.

Die Basis 44 ist dem Untergrund 36 zugeordnet und einer hohen Belastung ausgesetzt. Daher kann die Basis 44 vorzugsweise eine im Vergleich zum Zinken 46 höhere Materialstärke aufweisen.

Das aufnehmende Teil 14 weist eine die Öffnung 38 wenigstens abschnittsweise umgebende Aussparung 56 auf.

Die Öffnungen 38 können vorzugsweise in jeweils wenigstens einer Aussparung 56 münden, sodass ein fließender Übergang zwischen Öffnung 38 und Aussparungen 56 entsteht. Die wenigstens eine Aussparung 56 kann an dem Teil 14 mit der Öffnung 38 auf der vom eingesteckten Teil 16 abgewandten Seite angeordnet sein. Durch die wenigstens eine Aussparung 56 kann eine größere freie Fläche für die Schweißverbindung entstehen. Die wenigstens eine Aussparung 56 kann mit einem Schweißmittel gefüllt sein (nicht gezeigt). Die Schweißstelle 6 kann insbesondere in ein zuvor wärmebehandeltes Gefüge 20 eingebettet sein, was in Fig. 3 beispielhaft in einer schematischen Detailansicht gezeigt ist. Zwischen dem wärmebehandelten Gefüge 20 und einem Schweißgut 22 an der Schweißstelle 6 kann ein Übergangsabschnitt 24 angeordnet sein, dessen Gefüge sich vom zuvor wärmebehandelten Gefüge 20 unterscheiden kann.

Wenigstens ein Teil 14 kann an seiner zum anderen Teil 16 zugewandten Seite mit wenigstens einer Vertiefung 58 zur Auflage eines in das Kettenglied 4 eingehängten weiteren Kettenglieds 4 versehen sein. So kann ein Verklanken, d.h. Festklemmen der Kettenglieder 4 in einer Schrägstellung, insbesondere einer Querstellung, zueinander verhindert werden.

Durch die wenigstens eine Vertiefung 58 kann ein Bewegungsraum für das eingehängte Kettenglied 4 erzeugt werden, wodurch das Verklanken verhindert werden kann. Beim Lösen einer Verklankung kommt es zu einer hohen und ruckartigen Belastung, die zu einer Zerstörung des Kettenstranges 1 führen kann. Auch im festgeklemmten Zustand der Kettenglieder 4 kann der Kettenstrang 1 höheren Kräften ausgesetzt sein, die zu einer Beanspruchung des Kettenstrangs 1 führen, die über die Beanspruchung eines Kettenstrangs 1 in einer gestreckten Lage hinausgehen. Folglich kann durch die wenigstens eine Vertiefung 58 der Abnutzungswiderstand des Kettenstrangs 1 verbessert werden.

Jeweils eine Vertiefung 58 kann an einer Eingangs- und einer Ausgangsebene der Einhängeöffnung 50 angeordnet sein. Bei der durch den Steg 52 geteilten Einhängeöffnung kann wenigstens eine Vertiefung 58 an jedem Einhängeabschnitt 54 angeordnet sein. Die wenigstens eine Vertiefung 58 kann beispielsweise als Fase 60 ausgeformt sein, die sich nach außen hin ausweitet.

In der gezeigten Ausgestaltung des Stegglieds 12 ist für jeden Einhängeabschnitt 54 in der Eingangs- und der Ausgangsebene jeweils eine Vertiefung 58 am das andere Teil 16 aufnehmende Teil 14 ausgeformt, sodass das Stegglied 12 insgesamt vier Vertiefungen 58 aufweist. Es können jedoch auch Vertiefungen 58 am eingesteckten Teil 16 ausgeformt sein.

Die Teile 14, 16 können aus unterschiedlichen Metalllegierungen gefertigt sein. Das Teil 16, welches zum Untergrund 36 gewandt ist, kann aus einer besonders beständigen, insbesondere harten Metalllegierung gefertigt sein und das Teil 24, welches als Auflageteil 14 dient, kann aus einer leichteren Metalllegierung gefertigt sein, wodurch sich das Gesamtgewicht des Kettenstrangs 1 verringert. Alternativ dazu können die Teile 14, 16 auch dieselbe Metalllegierung aufweisen, welche im Vergleich zum Verbindungsglied 10 verschleißbeständiger ist, indem er beispielsweise eine höhere Härte aufweist.

Die Teile 14, 16 können unabhängig und separat voneinander wärmevorbehandelt sein, sodass die optimalen Prozesseigenschaften für jedes Teil 14, 16 eingestellt werden können.

Die Teile 14, 16 und die Kettenglieder 4 können in einem automatisierten Prozess zum Kettenstrang zusammengefügt sein. So können die Teile 14, 16 und Verbindungsglieder 10 nach dem, insbesondere individuellen, Wärmebehandlungsprozess von einem Handhabungsroboter zum Kettenstrang 1 zusammengesetzt werden und anschließend von einem Schweißroboter verschweißt werden.

Die Teile 14, 16 können insbesondere durch Reibverschweißen miteinander verschweißt sein. Das Verbindungsglied 10 kann vor dem Reibverschweißen in das Stegglied 12 eingehängt werden. Da der Wärmeeintrag durch das Reibverschweißen lokal auf einen kleinen Bereich begrenzt ist, erübrigt sich auch eine nachträgliche Wärmebehandlung.

### Bezugszeichen

- 1: Kettenstrang
- 2: Reifenkette
- 4: Kettenglieder
- 5: Laufnetz
- 6: Schweißstelle
- 8: Fügestelle
- 10: Verbindungsglied
- 12: Stegglied
- 14: Teil
- 16: Teil
- 18: Knotenpunkt
- 20: wärmebehandeltes Gefüge
- 22: Schweißgut
- 24: Übergangsabschnitt
- 28: Auflageteil
- 30: Fahrzeugreifen
- 32: Lauffläche
- 36: Untergrund
- 38: Öffnungen
- 40: Zapfen
- 42: Auflageebene
- 44: Basis
- 46: Zinken
- 48: Stufenabschnitt
- 50: Einhängeöffnung
- 52: Steg
- 54: Einhängeabschnitt
- 56: Aussparung
- 58: Vertiefung
- 60: Fase
- S: Steckrichtung

## Patentansprüche

1. Kettenstrang (1) für eine Reifenkette (2) mit einer Mehrzahl von ineinander gehängten Kettengliedern (4), wobei wenigstens ein Kettenglied (4) eine als Schweißstelle (6) ausgebildete Fügestelle (8) aufweist, an der das Kettenglied (4) zusammengefügt ist, wobei das wenigstens eine Kettenglied (4) aus wenigstens zwei miteinander verschweißten Teilen (14, 16) aufgebaut ist und vor dem Schweißen der Schweißstelle (6) wärmebehandelt ist, wobei ein Teil (16) des wenigstens einen Kettenglieds (4) mit wenigstens einem Zapfen (40) versehen ist, der in eine Öffnung (38) eines anderen Teils (14) des wenigstens einen Kettenglieds (4) eingesteckt ist, wobei der wenigstens eine Zapfen (40) nicht auf der vom eingesteckten Teil (16) abgewandten Seite des anderen Teils (14) über eine die wenigstens eine Öffnung (38) zumindest abschnittsweise umgebende Aussparung (56) herausragt.

2. Kettenstrang (1) nach Anspruch 1, **dadurch gekennzeichnet, dass** die Schweißstelle (6) in ein zuvor wärmebehandeltes Gefüge (20) eingebettet ist.

3. Kettenstrang (1) nach Anspruch 1 oder 2, **dadurch gekennzeichnet, dass** die Teile (14, 16) über eine Formschlussverbindung miteinander verbunden sind.

4. Kettenstrang (1) nach Anspruch 1, 2 oder 3, **dadurch gekennzeichnet, dass** die Teile (14, 16) zusammengesteckt sind.

5. Kettenstrang (1) nach Anspruch 4, **dadurch gekennzeichnet, dass** das Teil (14, 16) mit der wenigstens einen Öffnung (38) die Aussparung (56) aufweist.

6. Kettenstrang (1) nach Anspruch 5, **dadurch gekennzeichnet, dass** sich die Aussparung (56) auf der vom eingesteckten Teil (16) abgewandten Seite des aufnehmenden Teils (14) befindet.

7. Kettenstrang (1) nach einem der Ansprüche 1 bis 6, **dadurch gekennzeichnet, dass** wenigstens ein Teil (14, 16) an seiner zum anderen Teil (14, 16) zugewandten Seite mit wenigstens einer Vertiefung (58) zur Auflage eines in das wenigstens eine Kettenglied (4) eingehängten weiteren Kettenglieds (4) versehen ist.

8. Kettenstrang (1) nach einem der Ansprüche 1 bis 7, **dadurch gekennzeichnet, dass** das wenigstens eine Kettenglied (4) und ein weiteres Kettenglied des Kettenstranges und/oder miteinander verschweißten Teile (14, 16) des wenigstens einen Kettenglieds (4) aus unterschiedlichen Werkstoffen gefertigt sind.

9. Kettenstrang (1) nach einem der Ansprüche 1 bis 8, **dadurch gekennzeichnet, dass** das wenigstens eine Kettenglied (4) ein Stegglied (12) ist, und dass mehrere Stegglieder (12) in ein ringförmiges Verbindungsglied (10) eingehängt sind.

10. Reifenkette (2) für ein Fahrzeugreifen (30), **gekennzeichnet durch** ein Laufnetz (5) mit wenigstens einem Kettenstrang (1) nach einem der Ansprüche 1 bis 9.

11. Reifenkette (2) nach Anspruch 10, **dadurch gekennzeichnet, dass** das in das eingesteckte Teil (16) aufnehmende Teil (14) bei einem auf dem Fahrzeugreifen (30) montierten Zustand auf dem Fahrzeugreifen (30) aufliegt.

12. Verfahren zum Herstellen eines Kettenstrangs (1) für eine Reifenkette (2) mit einer Mehrzahl von ineinander gehängten Kettengliedern (4), wobei wenigstens ein Kettenglied (4) der Kettenglieder aus wenigstens zwei miteinander verschweißten Teilen (14, 16) aufgebaut ist, umfassend den Schritt: Wärmebehandlung des wenigstens eines Kettengliedes (4) vor dem Verschweißen, wobei ein Teil (16) des wenigstens einen Kettenglieds (4) mit wenigstens einem Zapfen (40) versehen ist, der in eine Öffnung (38) eines anderen Teils (14) des wenigstens einen Kettenglieds (4) eingesteckt ist, wobei der wenigstens eine Zapfen (40) nicht auf der vom eingesteckten Teil (16) abgewandten Seite des anderen Teils (14) über eine die wenigstens eine Öffnung (38) zumindest abschnittsweise umgebende Aussparung (56) herausragt.

13. Verfahren nach Anspruch 12, wobei Kettenglieder (4) und/oder die Teile (14, 16) des wenigstens einen Kettenglieds (4), die aus unterschiedlichen Werkstoffen gefertigt sind, getrennt voneinander wärmebehandelt werden.

## Claims

1. Chain strand (1) for a tyre chain (2) with a plurality of interlinked chain links (4), wherein at least one chain link (4) has a joining point (8) in the form of a welded joint (6), at which the chain link (4) is joined together, wherein the at least one chain link (4) is constructed of at least two parts (14, 16) that are welded together and is thermally treated before the welded joint (6) is welded, wherein one part (16) of the at least one chain link (4) is equipped with at least one journal (40), which is inserted into an aperture (38) of another part (14) of the at least one chain link (4), wherein the at least one journal (40) does not, on that side of the other part (14) facing away from the inserted part (16), project beyond a recess (56) that encompasses the at least one aperture (38) at least in sections.

2. Chain strand (1) according to claim 1, **characterised in that** the welded joint (6) is embedded in a structure (20) that has previously been thermally treated.

3. Chain strand (1) according to claim 1 or 2, **characterised in that** the parts (14, 16) are connected to one another via a positive-locking connection.

4. Chain strand (1) according to claim 1, 2 or 3, **characterised in that** the parts (14, 16) are plugged together.

5. Chain strand (1) according to claim 4, **characterised in that** the part (14, 16) with the at least one aperture (38) has the recess (56).

6. Chain strand (1) according to claim 5, **characterised in that** the recess (56) is situated on that side of the receiving part (14) that faces away from the inserted part (16).

7. Chain strand (1) according to one of the claims 1 to 6, **characterised in that** at least one part (14, 16) is equipped, on its side facing the other part (14, 16), with at least one indentation (58) to support a further chain link (4) that is hooked into the at least one chain link (4).

8. Chain strand (1) according to one of the claims 1 to 7, **characterised in that** the at least one chain link (4) and a further chain link of the chain strand and/or welded-together parts (14, 16) of the at least one chain link (4) are manufactured from different materials.

9. Chain strand (1) according to one of the claims 1 to 8, **characterised in that** the at least one chain link (4) is a stud link (12), and that several stud links (12) are hooked into a ring-shaped connecting link (10).

10. Tyre chain (2) for a vehicle tyre (30), **characterised by** a chain mesh (5) with at least one chain strand (1) according to one of the claims 1 to 9.

11. Tyre chain (2) according to claim 10, **characterised in that** the receiving part (14) in the inserted part (16) rests on the vehicle tyre (30) when fitted on the vehicle tyre (30).

12. Method for producing a chain strand (1) for a tyre chain (2) with a plurality of interlinked chain links (4), wherein at least one chain link (4) of the chain links is constructed of at least two parts (14, 16) that are welded together, comprising the step: thermal treatment of at least one chain link (4) before welding, wherein one part (16) of the at least one chain link (4) is equipped with at least one journal (40) that is inserted into an aperture (38) of another part (14) of the at least one chain link (4), wherein the at least one journal (40) does not, on that side of the other part (14) facing away from the inserted part (16), project beyond a recess (56) that encompasses the at least one aperture (38) at least in sections.

13. Method according to claim 12, wherein chain links (4) and/or parts (14, 16) of the at least one chain link (4) that are made of different materials are thermally treated separately from one another.

## Revendications

1. Tronçon de chaîne (1) pour une chaîne de pneumatique (2) comprenant une pluralité de maillons de chaîne (4) accrochés les uns dans les autres, dans lequel au moins un maillon de chaîne (4) présente un point de jonction (8) réalisé sous la forme d'un point de soudage (6) auquel le maillon de chaîne (4) est joint, dans lequel le au moins un maillon de chaîne (4) est réalisé en au moins deux pièces (14, 16) soudées l'une à l'autre et est traité thermiquement avant le soudage du point de soudage (6), dans lequel une pièce (16) du au moins un maillon de chaîne (4) est pourvue d'au moins un tenon (40) qui est inséré dans une ouverture (38) d'une autre pièce (14) du au moins un maillon de chaîne (4), dans lequel le au moins un tenon (40) ne fait pas saillie sur le côté de l'autre pièce (14) opposé à la pièce insérée (16) via une rainure (56) entourant au moins partiellement la au moins une ouverture (38).

2. Tronçon de chaîne (1) selon la revendication 1, **caractérisé en ce que** le point de soudage (6) est incorporé dans une structure (20) préalablement traitée thermiquement.

3. Tronçon de chaîne (1) selon la revendication 1 ou 2, **caractérisé en ce que** les pièces (14, 16) sont reliées entre elles par une liaison par complémentarité de formes.

4. Tronçon de chaîne (1) selon la revendication 1, 2 ou 3, **caractérisé en ce que** les pièces (14, 16) sont assemblées par emboîtement.

5. Tronçon de chaîne (1) selon la revendication 4, **caractérisé en ce que** la pièce (14, 16) pourvue de la au moins une ouverture (38) présente la rainure (56).

6. Tronçon de chaîne (1) selon la revendication 5, **caractérisé en ce que** la rainure (56) se trouve sur le côté de la pièce réceptrice (14) opposé à la partie insérée (16).

7. Tronçon de chaîne (1) selon l'une quelconque des revendications 1 à 6, **caractérisé en ce qu'**au moins une pièce (14, 16) est pourvue, sur son côté tourné vers l'autre pièce (14, 16), d'au moins un renfoncement (58) pour l'appui d'un maillon de chaîne supplémentaire (4) accroché dans le au moins un maillon de chaîne (4).

8. Tronçon de chaîne (1) selon l'une quelconque des revendications 1 à 7, **caractérisé en ce que** le au moins un maillon de chaîne (4) et un maillon de chaîne supplémentaire du tronçon de chaîne et/ou des pièces soudées l'une à l'autre (14, 16) du au moins un maillon de chaîne (4) sont fabriquées à partir de matériaux différents.

9. Tronçon de chaîne (1) selon l'une quelconque des revendications 1 à 8, **caractérisé en ce que** le au moins un maillon de chaîne (4) est un maillon à étai (12), et **en ce que** plusieurs maillons à étai (12) sont accrochés dans un maillon de liaison annulaire (10).

10. Chaîne de pneumatique (2) pour un pneumatique de véhicule (30), **caractérisée par** un filet de roulement (5) avec au moins un tronçon de chaîne (1) selon l'une quelconque des revendications 1 à 9.

11. Chaîne de pneumatique (2) selon la revendication 10, **caractérisée en ce que** la pièce (14) recevant la pièce insérée(16) repose sur le pneumatique de véhicule (30) dans un état monté sur le pneumatique de véhicule (30).

12. Procédé de fabrication d'un tronçon de chaîne (1) pour une chaîne de pneumatique (2) comprenant une pluralité de maillons de chaîne (4) accrochés les uns aux autres, dans lequel au moins un maillon de chaîne (4) des maillons de chaîne est conçu en au moins deux pièces (14, 16) soudées l'une à l'autre, comprenant l'étape consistant à : traiter thermiquement le au moins un maillon de chaîne (4) avant le soudage, dans lequel une pièce (16) du au moins un maillon de chaîne (4) est pourvue d'au moins un tenon (40) qui est inséré dans une ouverture (38) d'une autre pièce (14) du au moins un maillon de chaîne (4), dans lequel le au moins un tenon (40) ne fait pas saillie sur le côté de l'autre pièce (14) opposé à la pièce insérée (16) via une rainure (56) entourant au moins partiellement la au moins une ouverture (38).

13. Procédé selon la revendication 12, dans lequel les maillons de chaîne (4) et/ou les pièces (14, 16) du au moins un maillon de chaîne (4) qui sont fabriquées à partir de matériaux différents sont traité(e)s thermiquement séparément les un(e)s des autres.
